# EUROPEAN PATENT APPLICATION

(11) **EP 1 760 500 A2**
(43) Date of publication of application: **07.03.2007**
(21) Application number: 06119692.9
(22) Date of filing: 29.08.2006
(51) Int. Cl.: G02B 6/00

(54) **Illuminator for flat panel display device and illuminator for double-sided flat panel display device**

(30) Priority: 02.09.2005 KR 20050081845; 01.06.2006 KR 20060049298
(71) Applicant: Samsung Electronics Co., Ltd., Suwon-si, Gyeonggi-Do (KR)
(72) Inventor: Hwang, Seong-mo, Gyeonggi-do (KR); Lee, Moon-gyu, Gyeonggi-do (KR); Kim, Young-chan, Gyeonggi-do (KR); Wee, Dong-ho, Gyeonggi-do (KR); Nam, Seung-ho, Gyeonggi-do (KR); Kim, Kyung-yeup Samsung Adv. Inst. of Technology, Gyeonggi-do (KR)
(74) Representative: Zimmer, Franz-Josef

(57) **Abstract**

Provided is an illuminator for a flat panel display device. The illuminator includes a light source generating light; a light guide plate that guides and distributes the light generated by the light source and is made of optically isotropic material; a collimator that is disposed between an end of the light guide plate and the light source and guides the light from the light source onto the light guide plate with a predetermined incident angle; a polarization separation layer that is made of optically anisotropic material having two refractive indices and formed on the light guide plate to transmit first polarized light from the light guide plate and reflect second polarized light from the light guide plate; and a beam out-coupling layer that is formed on the polarization separation layer and out-couples the light incident from the polarization separation layer.

## Description

### BACKGROUND OF THE INVENTION

### 1. Field of the Invention

The present invention relates to an illuminator for a flat panel display device, and more in particular, to an illuminator in which incident light from a light source placed on one side of a light guide plate is separated into different polarized light and out-coupled to the flat panel display device.

### 2. Description of the Related Art

Flat panel displays are classified into light emitting display devices and light receiving display devices. A liquid crystal display device is a light receiving display device which does not form an image by emitting light by itself, but by receiving external light. Thus, an additional light source, for example, a backlight unit, is installed to supply light and to visualize the image according to an on-off operation of liquid crystals. Backlight units are classified into direct light backlights and edge light backlights. An edge light backlight unit in which a linear light source is installed along edges includes a light guide plate to uniformly guide the light generated from the light source to the liquid crystal panel.

However, since the light emitted from the backlight unit through the light guide plate is unpolarized, it cannot be used as is in a liquid crystal display and needs to be polarized through a linear polarizer. Through a linear polarizer, half of the optical energy is lost, thereby reducing energy efficiency, and the lost light is converted into heat and causes a heat generation problem. Therefore, the efficiency of illuminators for providing polarized light should be improved.

U.S. Patent Nos. 5,845,035 and 5,808,709 disclose illuminators having a light guide structure in which light of one polarization is out-coupled and light of the other polarization is recycled.

The illuminator disclosed in U.S. Patent No. 5,845,035 separates light of different polarization using total reflection of a polarized light occurring due to a difference of the refractive indices for different polarization of light at an interface between an optically isotropic layer and an optically anisotropic layer. However, since the difference in the refractive indices is not sufficient, a collimator for guiding the light toward the light guide structure at an angle sufficient for total internal reflection is required as mentioned in U.S. Patent No. 5,808,709. If collimation is not sufficient, separation is not properly achieved.

The size of a collimator, which determines the size of the exterior of a flat panel display device, is a significant design factor. Thus a collimator which can collimate light onto the light guide structure at a desired angle when disposed within a short distance from a light source is needed to provide a wide valid display surface. However, a conventional collimator requires relatively a long distance from a light source.

Moreover, the light guide structure of a flat panel display device in which polarized light is separated using the difference in refractive indices for different polarization of light at an interface between an optically anisotropic layer and an optically isotropic layer requires a light out-coupling structure in which polarized light is out-coupled from the surface to the liquid crystal panel. Such a light out-coupling structure may be a prism sheet in the form of a fine solid structure on the surface of the light guide structure.

However, it is difficult to form the fine solid structure on the surface of the optically anisotropic layer and the processing of the fine solid structure is not efficient. A material used to secure a sufficient thickness for an optically anisotropic light guide plate is also limited. Accordingly, a light guide structure in which an optically isotropic material can be employed both as the light guide plate and the beam out-coupling layer is needed.

Japanese Patent Publication No. 2005-070201 and PCT No. 2003-029884 disclose an illuminator for a double-sided flat panel display device. However, the illuminator in 2005-070201 includes an unpolarized light guide plate made of a double-sided prism which requires an absorption polarizer on both sides and thus has low energy efficiency. The illuminator in 2003-029884 includes a prism on a surface of a light guide plate and a reflection reflective polarizer on the beam out-coupling side which transmits one polarization and reflects the perpendicular polarization. Because the reflected polarized light passes the light guide plate again, partial light loss or the depolarization of the wanted polarization may easily occur.

### SUMMARY OF THE INVENTION

The present invention provides an illuminator for a flat panel display device having a light guide structure which out-couples first polarized light and recycles second polarized light by changing the polarization of the second polarized light or depolarizing and separating the second polarized light again, thus maximizing light efficiency.

The present invention also provides a light out-coupling structure which minimizes light loss and is manufactured easily, and a collimator which can collimate light sufficiently within a short region.

According to an aspect of the present invention, there is provided an illuminator for a flat panel display in which polarized light is separated in a light guide structure to out-couple first and second polarized light through opposite sides to improve light efficiency.

According to an aspect of the present invention, there is provided an illuminator for a flat panel display device comprising: a light source generating light; a light guide plate that transfers and distributes the light generated by the light source and is made of optically isotropic material; a collimator that is disposed between an end of the light guide plate and the light source and guides the light from the light source onto the light guide plate with a predetermined incident angle; a polarization separation layer that is made of optically anisotropic material having two refractive indices and formed on the light guide plate to transmit first polarized light from the light guide plate and reflect second polarized light from the light guide plate; and a beam out-coupling layer that is formed on the polarization separation layer and out-couples the light incident from the polarization separation layer.

The illuminator separates a first polarized element on a boundary surface of the light guide plate and the polarization separation layer to out-couple through the beam out-coupling layer and totally reflects a second polarized element back to the light guide plate such that the polarization of the light is converted or removed while being recycled, and thus separates the polarized light repetitively.

The polarization separation is possible due to the anisotropy of the polarization separation layer. When the refractive index of the polarization separation layer in a first direction is nₑ, and the refractive index in a second direction which is perpendicular to the first direction is nₒ, the refractive index of the light guide plate nᵢ is less than or equal to a first refractive index of the polarization separation layer nₑ and greater than a second refractive index of the polarization separation layer no.

For easier understanding, the polarized element in the first direction is referred to as first polarized element, and the polarized element in the second direction is referred to as second polarized element. When the light that is incident at a predetermined incidence angle on the light guide plate through the collimator from the light source reaches the boundary surface of the light guide plate and the polarization separation layer, the first polarized element proceeds to the polarization separation layer since the first refractive index nₑ is greater than or equal to the refractive index nᵢ of the light guide plate, and the second polarized element is totally reflected since the second refractive index nₒ is smaller than the refractive index nᵢ of the light guide plate. The predetermined incidence angle relates to an angle in the range that can be totally reflected on the boundary surface of the polarization separation layer and the light guide plate.

The first polarized element that proceeded to the polarization separation layer is outcoupled to the display panel on the outside through a beam out-coupling layer formed on an upper surface of the polarization separation layer. The beam out-coupling layer out-couples the light incident on the lower surface by a solid pattern like a prism sheet to the upper surface, and may be in the form of a film. The beam out-coupling structure of the beam out-coupling layer may be a solid pattern that can out-couple the light that projected the polarization separation layer, a periodic or a non-periodic pattern, or a pattern that is well known in the art.

The beam out-coupling layer may be formed of optically isotropic material. If the beam out-coupling layer is optically anisotropic, it is difficult to form a fine solid pattern on a surface of the beam out-coupling layer. Thus, if the beam out-coupling layer is formed of optically isotropic film, efforts and costs for manufacturing of a beam out-coupling layer can be reduced.

The collimator collimates light emitted from the light source in various directions such that the light is incident on the side of the light guide plate at the above described predetermined angle. The collimator may be a wedge type reflection mirror, which is well known in the art, or may have a new structure for reducing the length. Those new structures for the collimator will be described in the following embodiments of the present invention.

According to another aspect of the present invention, there is provided an illuminator for a double-sided flat panel display device comprising: a light source generating light; a light guide plate that guides and distributes the light generated by the light source and is made of optically isotropic material; a collimator that is disposed between an end of the light guide plate and the light source and guides the light from the light source onto the light guide plate with a predetermined incident angle; a first polarization separation layer that is formed on a top surface of the light guide plate and transmits a first polarized light from the light guide plate and reflects a second polarized light from the light guide plate; a second polarization separation layer that is formed on a bottom surface of the light guide plate and reflects a first polarized light from the light guide plate and transmits a second polarized light from the light guide plate; and beam out-coupling layers that are formed on the outer surfaces of the first and second polarization separation layers and out-couple the light incident from each of the polarization separation layers.

The illuminator for a double-sided flat panel display device uses a light guide plate and the first and second polarization separation layers formed on both sides of the light guide plate to separate perpendicular polarized elements so that the perpendicular polarized elements separated from a light source can be used on both sides of the light guide plate. Thus, loss of optical energy due to absorptive polarizer is eliminated and loss due to scattering which occurs inevitably during reflection or transmission can be minimized.

Since the illuminator for a double-sided flat panel display device uses total reflection of a polarized element that occurs on a boundary surface of a layer formed of optically isotropic material and a layer formed of optically anisotropic material, a collimator collimating light generated by the light source and beam out-coupling structure as described above are required.

### BRIEF DESCRIPTION OF THE DRAWINGS

The above and other features and advantages of the present invention will become more apparent by describing in detail exemplary embodiments thereof with reference to the attached drawings in which:
FIG. 1 is a cross-sectional view of an illuminator for a flat panel display device according to an embodiment of the present invention;
FIG. 2 illustrates the principle of polarization separation of polarized light in the illuminator of FIG. 1;
FIG. 3 illustrates an illuminator for a flat panel display device including a quarter-wave plate at an end of a light guide plate according to another embodiment of the present invention;
FIG. 4 illustrates an illuminator for a flat panel display device including a polarization conversion layer according to another embodiment of the present invention;
FIG. 5 illustrates an illuminator for a flat panel display device including a reflection mirror on a bottom surface of a polarization conversion layer according to another embodiment of the present invention;
FIG. 6 is a cross-sectional view illustrating an illuminator in which the axis of the refractive index of a polarization separation layer is rotated by 90 degree in the embodiment of FIG. 1;
FIG. 7A illustrates a collimator for a illuminator for a flat panel display device according to an embodiment of the present invention;
FIG. 7B is a simulation result illustrating the collimation of the collimator of FIG. 7A;
FIG. 7C is a simulation result illustrating the beam distribution of the beam incident on the light guide plate through the collimator of FIG. 7A;
FIGS. 8A and 8B illustrate a collimator and the beam distribution thereof according to another embodiment of the present invention;
FIGS. 9A and 9B illustrate a collimator and the beam distribution thereof according to another embodiment of the present invention;
FIGS. 10A and 10B illustrate another embodiment of the collimator of FIG. 9A and the beam distribution thereof;
FIGS. 11A and 11 B illustrate another embodiment of the collimator of FIG. 9A and the beam distribution thereof;
FIGS. 12A and 12B illustrate another embodiment of the collimator of FIG. 9A and the beam distribution thereof;
FIGS. 13A and 13B illustrate a collimator and the beam distribution thereof according to another embodiment of the present invention;
FIG. 14 illustrates a collimator according to another embodiment of the present invention;
FIG. 15 illustrates a collimator according to another embodiment of the present invention;
FIG. 16 is a cross-sectional view of an illuminator for a double-sided flat panel display according to an embodiment of the present invention; and
FIG. 17 is a cross-sectional view illustrating an illuminator in which the respective axis of the refractive indices of first and second polarization separation layers is rotated by 90 degree in the embodiment of FIG. 1.

### DETAILED DESCRIPTION OF THE INVENTION

The present invention will now be described more fully with reference to the accompanying drawings, in which exemplary embodiments of the invention are shown. Like reference numerals denote like elements throughout the drawings, and descriptions for the like reference numerals will not be repeated.

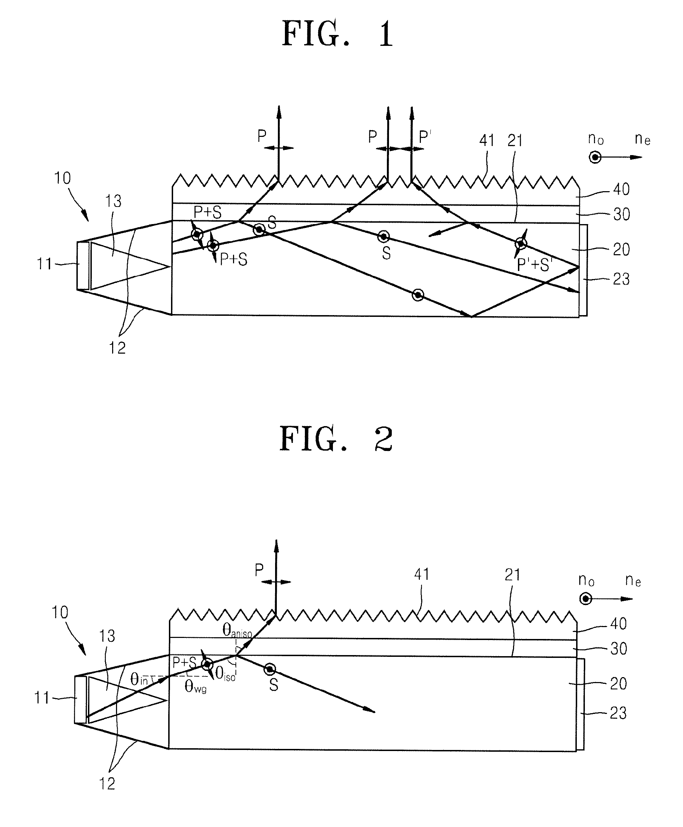

FIG. 1 is a cross-sectional view of an illuminator for a flat panel display device according to an embodiment of the present invention. The illuminator of FIG. 1 includes a light source 11, a collimator 10 collimating the light generated by the light source 11, and a light guide structure in which the incident light from the collimator 10 is uniformly distributed onto the entire flat panel display device. In the light guide structure, the incident light is polarized and separated so that first polarized light P is out-coupled, and then second polarized light S is recycled and its polarization is converted into first polarized light P, and then the first polarized light P' is out-coupled.

The collimator 10 may include reflection mirrors 12 facing each other and forming a trapezoid with the light source 11 and the light guide structure, the end of the trapezoid formed by the light source 11 being narrow and the other end of the trapezoid formed by the light guide structure being wide, a triangle prism 13 placed between the reflection mirror 12, the bottom surface of the triangle prism 13 facing the light source 11 and the vertex of the triangle prism 13 facing the reflection mirrors 12. The shape of the collimator 10, however, is not limited, and various shapes according to various embodiments of the present invention will be described hereinafter.

The light guide structure includes a light guide plate 20, a polarization separation layer 30, and a beam out-coupling layer 40. The light guide plate 20 is made of an optically isotropic material, the polarization separation layer 30 is made of an optically anisotropic material and formed on the light guide plate 20, and the beam out-coupling layer 40 is formed on the polarization separation layer 30 and has a light out-coupling structure 41. A reflection mirror 23 may be formed on the end of the light guide plate 20 opposite the light source 11.

The light guide plate 20 transmits and distributes the light generated by the light source 11, and the polarization separation layer 30 transmits the first polarized light P incident on an interface 21 between the light guide plate 20 and the polarization separation layer 30 according a difference in refractive indices of the light guide plate 20 and the polarization separation layer 30, and totally internally reflects the second polarized light S. The beam out-coupling layer 40 out-couples the incident light from the polarization separation layer 30 to the display panel (not shown).

The beam out-coupling layer 40 is a layer formed of an optically isotropic material and has a solid pattern formed on its top surface like a prism sheet. Since an optically isotropic layer is employed, the surface of the beam out-coupling layer 40 can be processed easily and light loss at a surface or at a bonding surface of the beam out-coupling layer 40 with other layers due to scattering can be reduced.

The polarization of light at the interface 21 between the optically isotropic light guide plate 20 and the optically anisotropic polarization separation layer 30 is as follows. The polarization separation layer 30 has a first polarization refractive index nₑ and a second polarization refractive index nₒ, and the light guide plate 20 has a refractive index nᵢ, satisfying the relation of nₒ<nᵢ≤ nₑ. Thus, when the unpolarized light P+S passing the collimator 10 and travelling through the light guide plate 20 is incident on the interface 21, the first polarized light P proceeds to the polarization separation layer 30 experiencing the refractive index nₑ of the polarization separation layer 30 and the second polarized light S is totally internally reflected, experiencing the refractive index nₒ of the polarization separation layer 30.

The totally internally reflected second polarized light S proceeds inside of the light guide plate 20. The light guide plate 20 may be designed to be optically isotropic, however, it may be slightly optically anisotropic in actuality. Thus the polarized light P'+S' is produced inside the light guide plate 20 and then separated again at the interface 21 and the first polarized light P' is transmitted through the interface 21.

FIG. 2 illustrates the principle of polarization separation in the illuminator of FIG. 1. The polarization separation of light in FIG. 1 is achieved under the assumption that a light collimated at a predetermined angle θin enters the light guide plate 20. For example, if the refractive index nᵢ of the light guide plate 20 is 1.58, and the refractive indices nₒ and nₑ of the polarization separation layer 30 are 1.49 and 1.88, respectively, for total reflection, the incident angle θiso on the interface 21 needs to be greater than the critical angle (asin(nₒ/nᵢ)=70.6°) with respect to the second polarized light S at the interface 21. In FIG. 2, since θwg=90°-θiso, the refraction angle θwg of light traveling from the collimator 10 to the light guide plate 20 should be smaller than 19.4°.

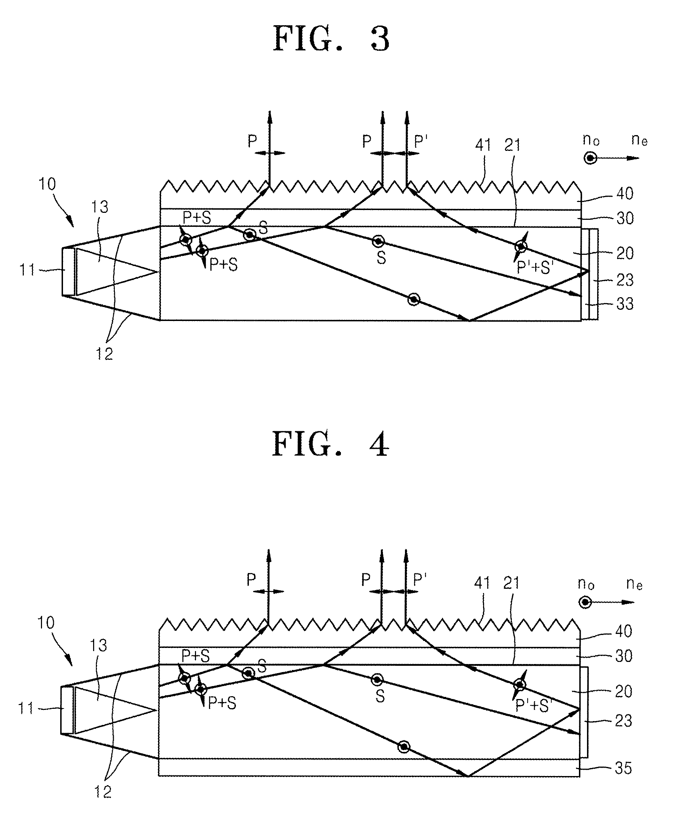

FIG. 3 illustrates an illuminator for a flat panel display device including a polarization conversion unit 33 at an end of a light guide plate 20 according to another embodiment of the present invention. The illuminator may further include a polarization conversion unit 33 between the reflection mirror 23 and the light guide plate 20. The polarization conversion unit may be a quarter-wave plate, a separate layer or a panel made of a different material than the reflection mirror 23, or a predetermined structure formed on the reflection mirror 23. The light incident on the reflection mirror 23 passes through the polarization conversion unit 33 immediately before and after being reflected by the reflection mirror 23 and so the polarization of at least a portion of the light is converted by 90°. That is, upon reaching the end of the light guide plate 20, the second polarized light S is reflected and converted into the first polarized light P'. The first polarized light P is out-coupled via the polarization separation layer 30 and the beam out-coupling layer 40.

FIG. 4 illustrates an illuminator for a flat panel display device including a

polarization conversion layer 35 according to another embodiment of the present invention. The structure of the illuminator of FIG. 4 is almost the same as the structure of the illuminator of FIG. 1. The illuminator of FIG. 4 may further include a polarization conversion layer 35 made of optically anisotropic material below the light guide plate 20. The polarization conversion layer 35 functions in a similar way to the polarization conversion unit 33 of FIG. 3 and the shape of the polarization conversion layer 35 is not limited to a flat layer.

Upon reaching the bottom surface of the light guide structure, the second polarized light S which is totally internally reflected at the interface 21 between the light guide plate 20 and the polarization separation layer 30 is totally internally reflected again due to the difference of the refractive indices of the polarization separation layer 30 and air. The light passes through the polarization conversion layer 35 and is converted into a depolarized light beam P'+S' to be separated again at the interface 21.

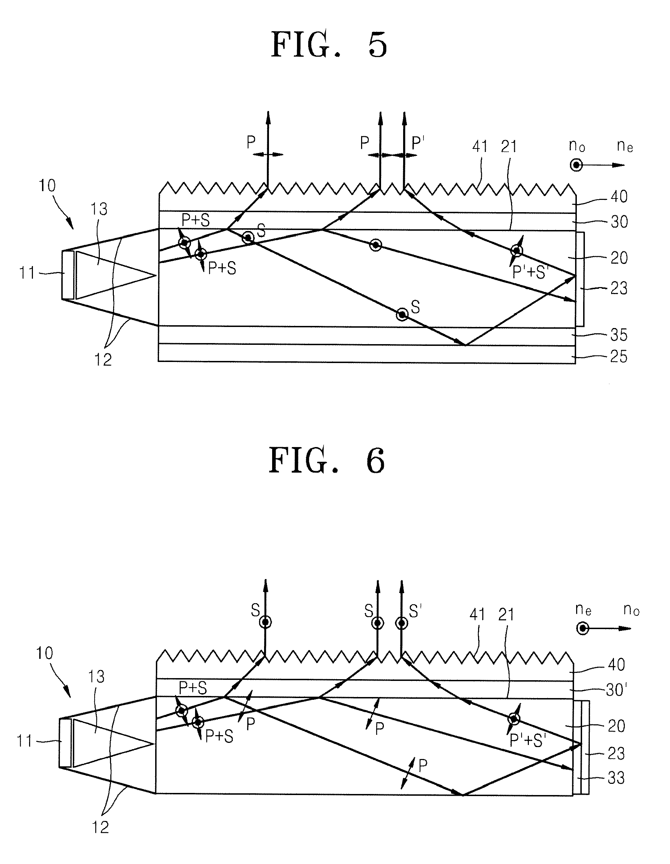

FIG. 5 illustrates an illuminator for a flat panel display device including a reflection mirror 25 on a bottom surface of the polarization conversion layer 35 according to another embodiment of the present invention. The structure of the current embodiment is almost the same as the structure of the embodiment shown in FIG. 4. The illuminator of FIG. 5 may further include the reflection mirror 25 beneath the polarization conversion layer 35. The light proceeding to the light guide plate 20 is collimated by the collimator 10, and ideally, a reflection mirror beneath the light guide plate 20 is not necessary. However, light which reaches the bottom surface of the light guide structure at an incident angle smaller than the critical angle due to scattering or reflection by the light out-coupling structure 41 may exist. The reflection mirror 25 reflects such light beams upward.

FIG. 6 is a cross-sectional view illustrating an illuminator in which the axis of the refractive indices of a polarization separation layer is rotated by 90 degree in the embodiment of FIG. 1. Unlike the polarization separation layer 30 in the embodiment of FIG. 1, the polarization separation layer 30' in the present embodiment has a refractive index nₑ in the depth direction of the cross section illustrated in the drawing, and a refractive index nₒ in the direction parallel to the depth direction. That is, the refractive index in the direction parallel to the length direction of the light source 11 may be nₑ, and the refractive index in the direction perpendicular thereto may be nₒ. When the refractive index of the light guide plate 20 is nᵢ, satisfying the relation of nₒ< nᵢ ≤ nₑ, and unpolarized ray P+S is incident through the collimator 10 on the light guide plate 20, the second polarized element S senses a refractive index nₑ which is greater than or equal to nᵢ and proceeds to the polarization separation layer 30', and the first polarized light P senses a refractive index nₒ smaller than nᵢ and is totally reflected.

The totally reflected first polarized light P continues proceeding inside the light guide plate 20. The light guide plate 20 is optically isotropic, but is substantially slightly optically anisotropic. Accordingly, while proceeding inside the light guide plate 20, the polarization of the polarized light P is changed to P'+S' and then separated again at the boundary surface 21, thereby being emitted as second polarized light S'.

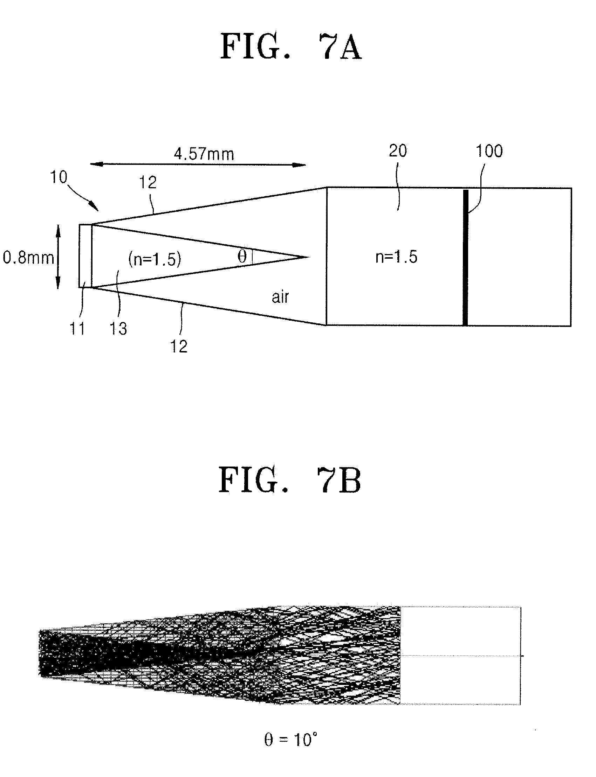

FIG. 7A illustrates the collimator 10 for an illuminator for a flat panel display device according to an embodiment of the present invention. The collimator 10 in the present embodiment includes reflection mirrors 12 that are disposed obliquely and face each other and a triangle prism 13 disposed between the reflection mirrors 12. The distance between the reflection mirrors 12 on the side of the light source 11 is less than the distance between the reflection mirrors 12 on the side of the light guide plate 20. The bottom surface of the triangle prism 13 faces the light source 11 and the vertex of the triangle prism 13 face the light guide plate 20.

The sizes and refractive indices of illuminators shown in FIGS. 7A, 8A, 9A, 10A, 11A, and 12A are examples for employing the illuminators in mobile communication terminals, and the present invention is not limited thereto.

The light source 11 may be a linear light source disposed along the side of the light guide plate 20, or a narrow, long surface light source, or a plurality of point light sources arranged in a narrow line. The cross section of the triangle prism 13 must be an isosceles triangle with a height greater than its base. The material composing the triangle prism 13 may have good light transmittance and be optically isotropic like the light guide plate 20. The refractive index of the triangle prism 13 may be similar to or less than the refractive index of the light guide plate 20. The space between the reflection mirrors 12 and the triangle prism 13 may be filled with air. A photodetector 100 of FIG. 7A is used in experiments or simulations for determining a light beam distribution transmitted through the collimator 10, and is not part of the illuminator of the present invention.

FIG. 7B is a simulation result illustrating the collimation of the collimator of FIG. 7A. In FIG. 7B, the apex angle of the triangle prism 13 is 10°. If the distance between the light source 11 and the light guide plate 20 is low, a satisfactory result is achieved even if the apex angle is greater than 10°.

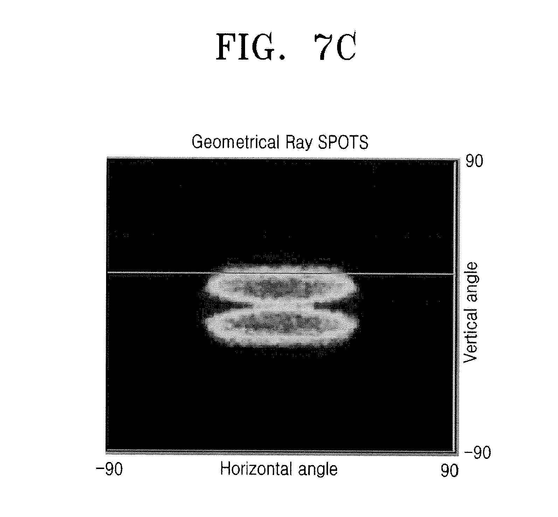

FIG. 7C is a simulation result illustrating the beam distribution of the beam incident on the light guide plate through the collimator of FIG. 7A. In FIG. 7C, most of the light beams are incident on the plane of the light guide plate 20 within the critical angle range.

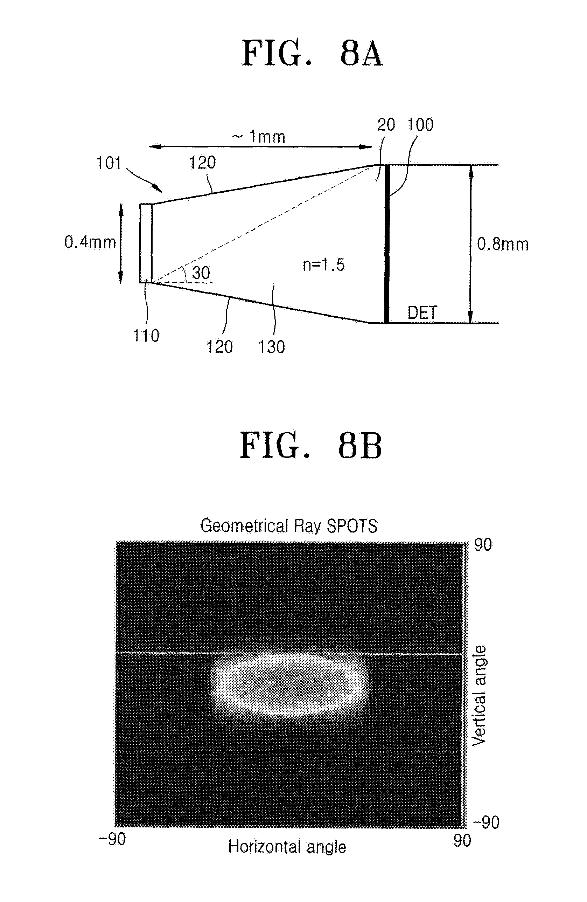

FIGS. 8A and 8B illustrate a collimator 101 and the beam distribution thereof according to another embodiment of the present invention. The thickness of the collimator 101 which forms a light guide extension portion 130 increases toward the light guide plate 20, and the cross section of the collimator 10 is trapezoidal. Light is totally internally reflected at two surfaces 120 of a light guide plate extension portion 130 tapered toward the light source 11, and then proceeds to the light guide plate 20. Accordingly, as illustrated in FIG. 8B, beams are distributed within a predetermined angle range.

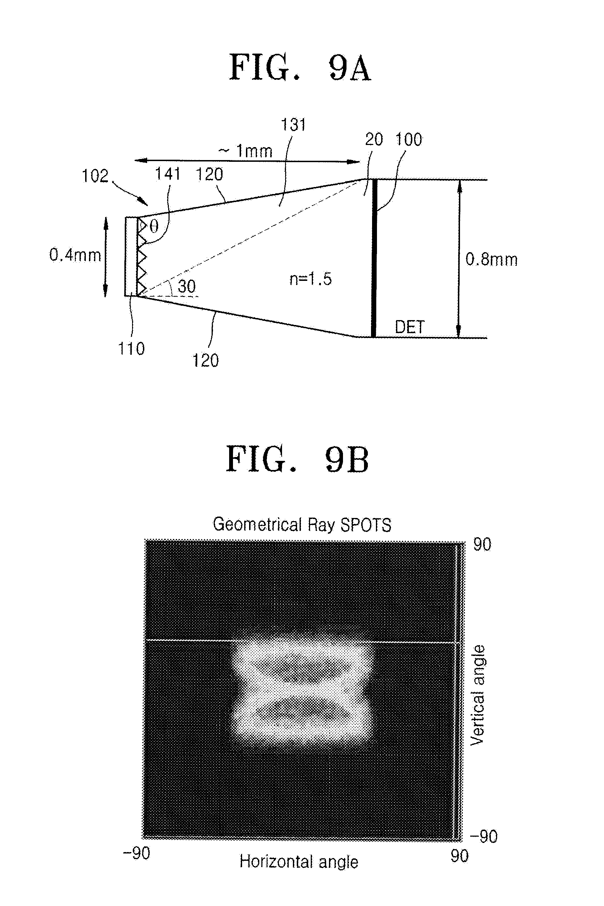

FIGS. 9A and 9B illustrate a collimator 102 and the beam distribution thereof according to another embodiment of the present invention. Like the collimator 101 of FIG. 8, the thickness of the collimator 102 which again forms a light guide extension portion131 increases toward the light guide plate 20, and the cross section of the collimator 102 is trapezoidal. But the collimator of FIG. 9A further include a prism pattern 141. The prism pattern 141 has valleys with apex angles ranging from 15° to 150°.

The angle distribution of the light incident on the light guide plate 20 differs according to the shape and size of the prism pattern 141, and in FIG. 9B, light with an angle of 0° relative to the center line of the light guide plate 20 is relatively smaller than in FIG. 8B. This indicates that the distance the light travels before out-coupled from the light guide plate 20 can be shortened.

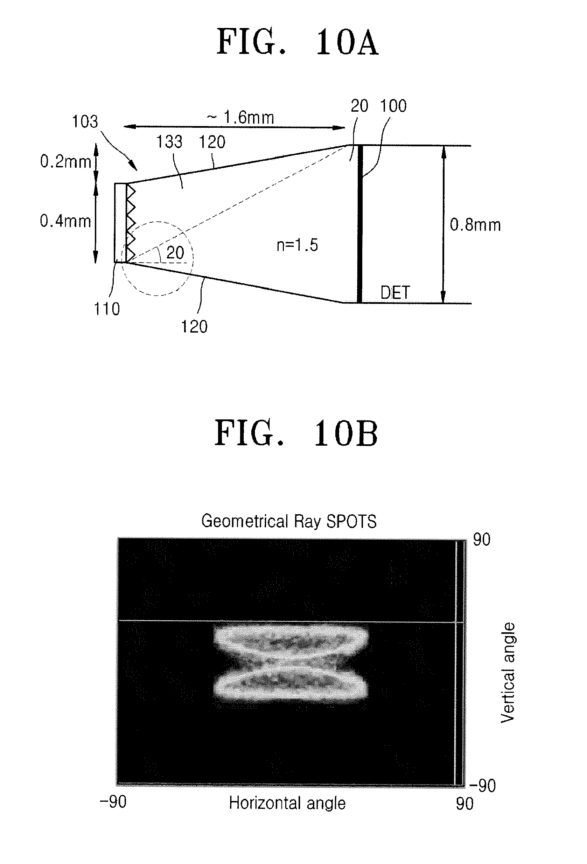

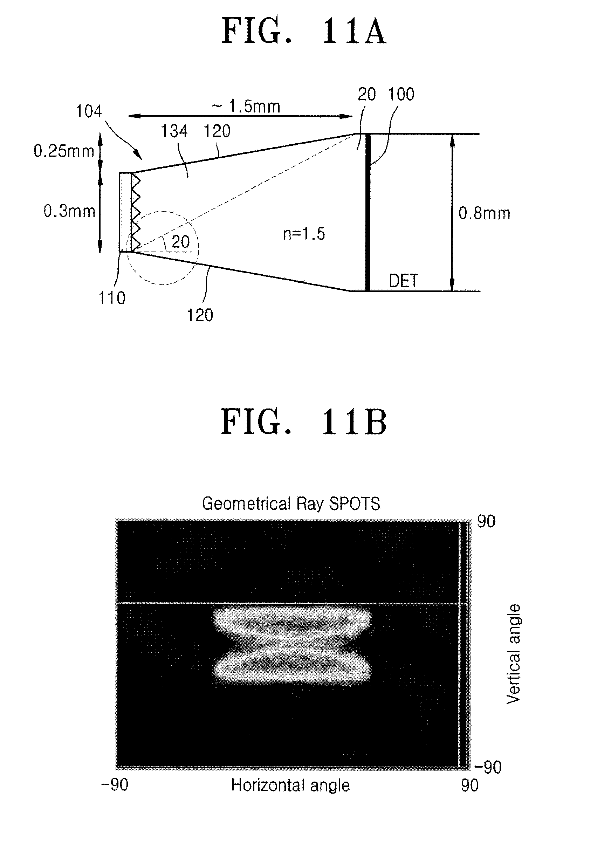

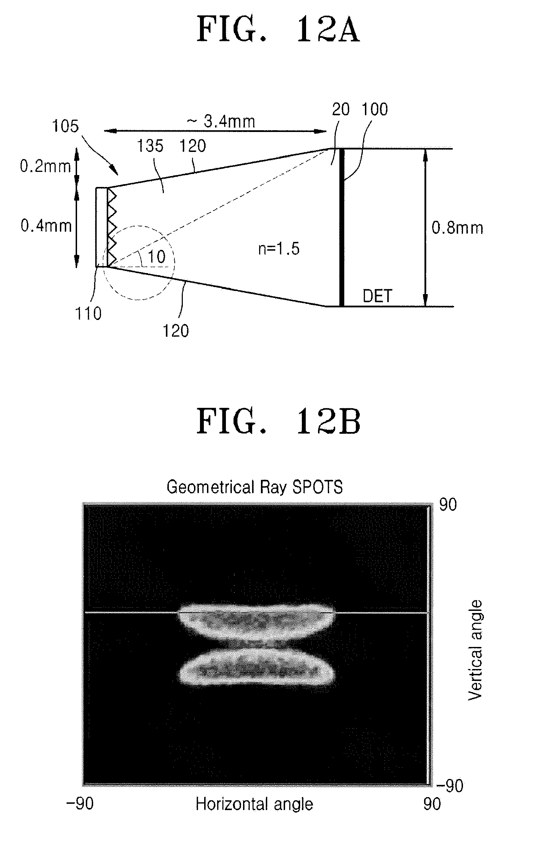

Three modifications of the collimator of FIG. 9A having different sizes and the beam distributions thereof will be described hereinafter. FIGS. 10A and 10B illustrate another embodiment of the collimator of FIG. 9A and the beam distribution thereof; FIGS. 11A and 11 B illustrate another embodiment of the collimator of FIG. 9A and the beam distribution thereof; and FIGS. 12A and 12B illustrate another embodiment of the collimator of FIG. 9A and the beam distribution thereof.

FIGS. 10B, 11 B, and 12B illustrate the beam distribution of the collimators of FIGS. 10A, 11A, and 12A. Referring to FIGS. 10B, 11B, and 12B, light having inclination angle within a range from 0° to 20° with respect to the center of the light guide plate can be obtained when the thickness of the light source is less than half of the thickness of the light guide plate 20, and the length of the collimation section, that is, the distance between the light source 11 and the light guide plate 20 is from one to four times of the thickness of the light guide plate.

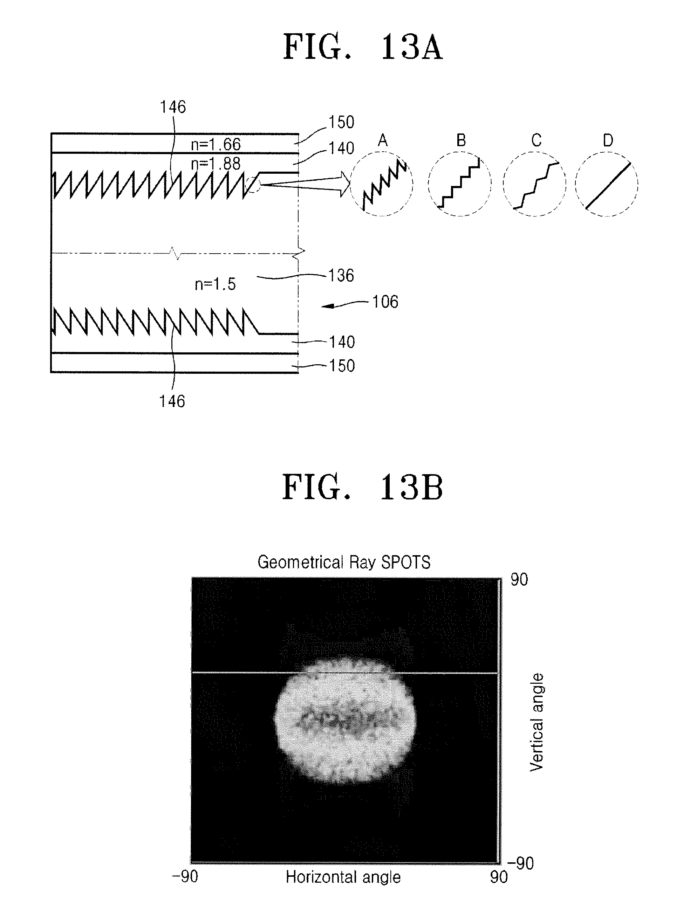

FIGS. 13A and 13B illustrate a collimator 106 and the beam distribution thereof according to another embodiment of the present invention. The collimator 106 extends from the light guide plate 20 part facing the light source. Inclined sawlike solid patterns 146 are formed on the surface of a light guide plate extension unit 136, first outer layers 140 are disposed on the outer surface of the light guide plate extension unit 136 to fill the inclined sawlike solid pattern 146 and have a greater refractive index than the light guide plate extension unit 136, and second outer layers 150 are disposed on the outer surface of the first outer layers 140 and have a refractive index which is smaller than that of the first outer layers 140 and greater than that of the second outer layers 150.

The first outer layers 140 and the second outer layers 150 may be formed of optically isotropic materials with different refractive indices. For example, if the refractive index of the light guide plate extension unit 136 is 1.5, the refractive indices of the first outer layers and the second outer layers 140 and 150 may be 1.88 and 1.66, respectively.

The light incident from the light guide plate extension unit 136 through the inclined sawlike solid pattern 146 to the first outer layers 140 is totally internally reflected at the interface between the first outer layers 140 and the second outer layers 150 or at the interface between the second outer layers 150 and the external air, and is incident on the light guide plate extension unit 136 passing the sloped surface of the inclined sawlike solid pattern 146. The incident light at this time is inclined at a smaller angle with respect to the center of the light guide plate 20 and proceeds to the light guide plate 20.

FIG. 13B illustrates the inclination distribution of the light beams incident on the light guide plate 20 after passing through the collimator 161 of FIG. 13A and the most of the light amount is distributed within a critical angle range. However, it would be better that the intensity of the light at an angle of 0° could be reduced should be prevented. For improving the light beam distribution, the inclined surfaces of the inclined sawlike solid pattern 146 can have various patterns as illustrated in A, B, C, and D of FIG. 13A.

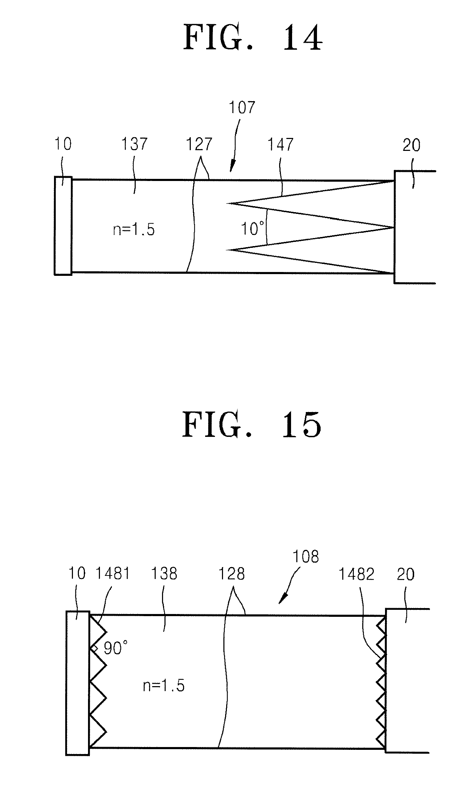

FIG. 14 illustrates a collimator 107 according to another embodiment of the present invention. The collimator 107 includes a transparent block 137 having approximately the same width and thickness as the light guide plate 20. An end near the light source 11 is planar, and a plurality of triangle prisms 147 are formed on the other end near the light guide plate 20.

FIG. 15 illustrates a collimator 108 according to another embodiment of the present invention. Like the collimator 107 of FIG. 14, the collimator 108 includes a transparent block 137 having approximately the same width and thickness as the light guide plate 20. A plurality of triangle prisms 1481 and 1482 are formed on both ends of the collimator 108 near the light source 10 and the light guide plate 20. The number and size of the prism patterns 1481 and 1482 may vary.

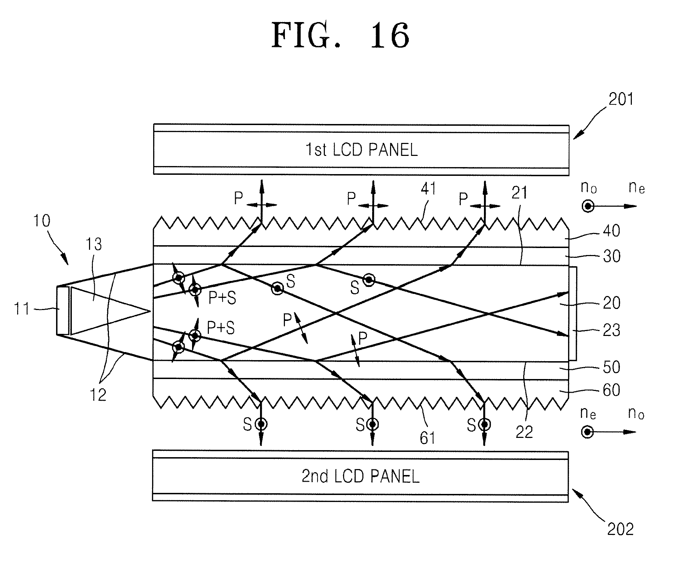

FIG. 16 is a cross-sectional view of an illuminator for a double-sided flat panel display according to an embodiment of the present invention. Referring to FIG. 16, the illuminator for a double-sided flat panel display device has a symmetrical light guide structure and light out-coupling structure and out-couples first and second polarized lights P and S toward first and second LCD panels 201 and 202 from both sides of the light guide structure, respectively.

The illuminator for a double-sided flat panel display according to an embodiment of the present invention includes a light source 11, a collimator 10 collimating the light generated by the light source 11, and a light guide structure in which the incident light from the collimator 10 is uniformly distributed onto the entire flat panel display device. In the light guide structure, the incident light is polarized and separated so that first polarized light P is out-coupled to a first LCD panel 201, and then second polarized light S is out-coupled to a second LCD panel 202.

The light guide structure includes a light guide plate 20, polarization separation layers 30 and 50, and beam out-coupling layers 40 and 60. The light guide structure is made of a light guide plate 20, first and second polarization separation layers 30 and 50 are disposed on the top and bottom surfaces of the light guide plate 20, and the first and second beam out-coupling layers 40 and 60 are disposed on the outer surfaces of the polarization separation layers 30 and 50 and have light out-coupling structures 41 and 61. A reflection mirror 23 may be formed at the end of the light guide plate 20 opposite the light source 11.

The polarization occurs in the present embodiment as in the embodiment illustrated in FIG. 1. The difference is that the axes of the refractive indices of the first and second polarization separation layers 30 and 50 are perpendicular. Accordingly, fist polarized light P is out-coupled and second polarized light S is totally internally reflected at the interface between the light guide plate 20 and the first polarization separation layer 30, and second polarized light S is out-coupled and first polarized light P is totally internally reflected at the interface between the light guide plate 20 and the second polarization separation layer 50.

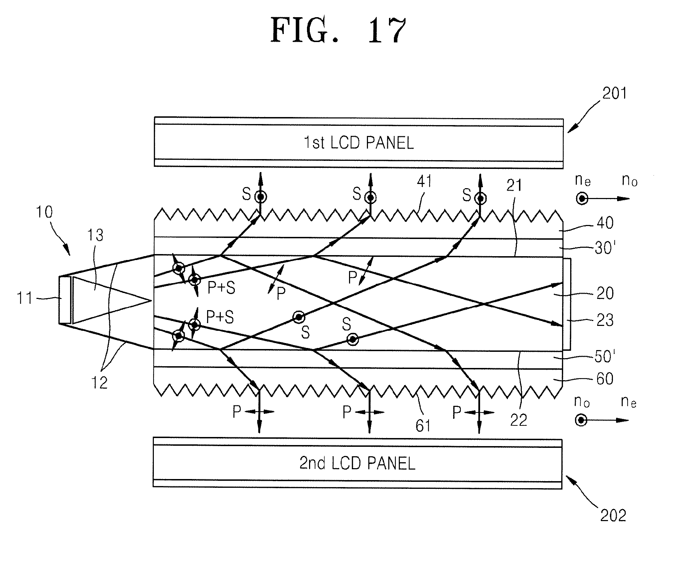

FIG. 17 is a cross-sectional view illustrating an illuminator in which the respective axis of the refractive indices of first and second polarization separation layers is rotated by 90 degree in the embodiment of FIG. 1. Unlike the first polarization separation layer 30 in the embodiment of FIG. 16, the first polarization separation layer 30' in the present embodiment has a refractive index nₑ in the depth direction of the cross section illustrated in the drawing and a refractive index nₒ in the direction perpendicular to the depth direction. That is, the refractive index in the direction parallel to the length direction of the light source 11 may be nₑ, and the refractive index in the direction perpendicular thereto may be nₒ. The second polarization separation layer 50' is disposed such that the first polarization separation layer 30' and the axis of the refractive index thereof cross at right angles.
When the refractive index of the light guide plate is nᵢ, satisfying the relation of nₒ< nᵢ ≤nₑ, and the unpolarized light P+S that is incident through the collimator 10 on the light guide plate 20 is incident on the boundary surface 21 or 22 with the first and second polarization separation layer 30' and 50', the first polarization separation layer 30' out-couples the second polarized light S and totally reflects the first polarized light P to the opposite side, and the second polarization separation layer 50' out-couples the first polarized light P and totally reflects the second polarized light S.
The illuminator for a double-sided flat panel display can be realized with any one of the embodiments of the illuminator for a flat panel display described with respect to Figures 1 to 15.
The illuminator for a flat panel display device according to the present invention includes a light guide structure in which light of one polarization is separated and out-coupled and the other orthogonal polarization of the light is converted to the first polarization and recycled, thus maximizing light efficiency.
Moreover, the illuminator for a double-sided flat panel display device according to an aspect of the present invention separates the light in the perpendicular polarizations to the light with the respective polarizations via opposite sides, thus improving light efficiency.
While the present invention has been particularly shown and described with reference to exemplary embodiments thereof, it will be understood by those of ordinary skill in the art that various changes in form and details may be made therein
without departing from the spirit and scope of the present invention as defined by the following claims.

## Claims

1. An illuminator for a flat panel display device comprising:
a light source (11) generating light;
a light guide plate (20) that guides and distributes the light generated by the light source (11) and is made of optically isotropic material;
a collimator (10) that is disposed between an end of the light guide plate (20) and the light source (11) and guides the light from the light source (11) onto the light guide plate (20) with a predetermined incident angle;
a polarization separation layer (30) that is made of optically anisotropic material having two refractive indices and formed on the light guide plate (20) to transmit first polarized light from the light guide plate (20) and reflect second polarized light from the light guide plate (20); and
a beam out-coupling layer (40) that is formed on the polarization separation layer (30) and out-couples the light incident from the polarization separation layer (30).

2. The illuminator of claim 1, wherein the refractive index (nᵢ) of the light guide plate (20) is less than or equal to a first refractive index (nₑ) of the polarization separation layer (30) and greater than a second refractive index (nₒ) of the polarization separation layer (30).

3. The illuminator of claim 1 or 2, wherein the beam out-coupling layer (40) is optically isotropic.

4. The illuminator according to one of claims 1 to 3, wherein the beam out-coupling layer (40) is an outer part of the polarization separation layer (30) and a solid pattern is formed thereon.

5. The illuminator according to one of claims 1 to 4, wherein the beam out-coupling layer (40) is optically isotropic and the refractive index of the beam out-coupling layer (40) is greater than or equal to the first refractive index of the polarization separation layer (30).

6. The illuminator according to one of claims 1 to 5, wherein the collimator (10) comprises:
two reflection mirrors (12) that are disposed obliquely such that the distance between the reflection mirrors (12) on the side of the light source (11) is less than the distance between the reflection mirrors (12) on the side of the light guide plate (20); and
a triangle prism (13) that is interposed between the reflection mirrors (12),
wherein the bottom surface of the triangle prism (13) faces the light source (11) and the vertex of the triangle prism (13) faces the light guide plate (20).

7. The illuminator according to one of claims 1 to 5, wherein the collimator (10) extends from one end part of the light guide plate (20) facing the light source (11) to the light source (11), the thickness of the collimator (10) gradually reduces toward the light source (11) and the cross-section of the collimator is a trapezoidal.

8. The illuminator of claim 7, wherein prism patterns (141) are formed on a surface of the collimator (102) facing the light source (11).

9. The illuminator of claim 7 or 8, wherein the length of the collimator (10,102) is from one to four times greater than the thickness of the light guide plate (20).

10. The illuminator of claims 1 to 5, wherein the collimator (106), comprises:
a light guide extension unit (136) which extends from the light guide plate (20) part facing the light source (11) and has sawlike solid patterns (146) on both sides of the light guide extension unit (136);
first outer layers (140) that are disposed outside of the light guide plate extension unit (136), fill the sawlike solid patterns (146) and have a greater refractive index than the light guide plate extension unit (136), and
second outer layers (150) that are disposed outside of the first outer layers (190) and have a refractive index that is smaller than the refractive index of the first outer layers (140) and greater than the refractive index of the outside.

11. The illuminator of claim 10, wherein the sawlike solid patterns (146) are formed of perpendicular surfaces and inclined surfaces directed to the light source (11).

12. The illuminator of claim 11, wherein the inclined surfaces further comprise a prism pattern (A,B,C).

13. The illuminator according to one of claims 1 to 5, wherein the collimator (107) is a transparent block (138) having an approximately the same width and thickness as the light guide plate (20) wherein the end near the light source (11) is flat and a plurality of trigonal prism patterns (147) are formed on the end near the light guide plate (20).

14. The illuminator according to one of claims 1 to 5, wherein the collimator (108) is a transparent block (138) having an approximately the same width and thickness as the light guide plate (20) wherein a plurality of trigonal prism patterns (1481, 1482) are formed respectively on the end near the light source (11) and on the end near the light guide plate (20).

15. The illuminator of claim 14, wherein the number and size of the trigonal prism patterns near the light source (11) is different from the number and size of the trigonal prism patterns (1481) near the light source (11) and the number and size of the trigonal prism patterns (1482) near the light guide plate (20)

16. An illuminator for a double-sided flat panel display device comprising:
an illuminator according to one of the claims 1 to 15, and
a second polarization separation layer (50) that is formed on a bottom surface of the light guide plate (20) and reflects the first polarized light from the light guide plate (20) and transmits the second polarized light from the light guide plate (20), and
a second beam out-coupling layer (60) formed on the outer surface of second polarization separation layer (50) and out-couples the light incident from the second polarization separation layer (50).

17. The illuminator of claim 16, wherein the light guide plate (20) is made of optically isotropic material and the first and second polarization separation layers (30,50) are made of optically anisotropic material having two refractive indices and the refractive index axes of the first and second polarization separation layers are orthogonal.

18. The illuminator of claim 16 or 17, wherein the refractive index (nᵢ) of the light guide plate (20) is less than or equal to the larger refractive index of the first and second polarization separation layers (30, 50) and greater than the smaller refractive index of the first and second polarization separation layers (30, 50).

19. The illuminator according to one of claims 16 to 18, wherein the beam out-coupling layers (40,60) are optically isotropic.

20. The illuminator according to one of claims 16 to 19, wherein the beam out-coupling layers (90, 60) are outer part of the first and second polarization separation layer (30, 50) and solid patterns are formed on the outer surface of the beam out-coupling layers (140, 60).

21. The illuminator according to one of claims 16 to 20, wherein the beam out-coupling layer (40, 60) is optically isotropic and the refractive indices of the beam out-coupling layers (60, 40) are greater than or equal to the larger refractive index of the corresponding polarization separation layer (30, 50).
